# EUROPÄISCHE PATENTANMELDUNG

(11) **EP 2 537 402 A1**
(43) Veröffentlichungstag der Anmeldung: **26.12.2012**
(21) Anmeldenummer: 12401120.6
(22) Anmeldetag: 18.06.2012
(51) Int. Cl.: A01C 17/00

(54) **Schleuderstreuer**

(30) Priorität: 23.06.2011 DE 102011051282
(71) Anmelder: Amazonen-Werke H. Dreyer GmbH & Co. KG, 49205 Hasbergen (DE)
(72) Erfinder: Resch, Rainer, 49170 Hagen a TW (DE); Scheufler, Bernd, 49205 Hasbergen (DE)

(57) **Zusammenfassung**

Schleuderstreuer mit einem Vorratsbehälter und zumindest einer unterhalb des Vorratsbehälters angeordneten Schleuderscheibe, der das sich im Vorratsbehälter befindliche Material über eine Dosiervorrichtung in einstellbarer Weise zuführbar ist, wobei die Zuführung des Materiales auf die jeweilige Schleuderscheibe mittels geeigneter Mittel zur Einstellung des Aufgabebereiches des Materials auf die jeweilige Schleuderscheibe einstellbar ist, wobei die Mittel von einem Bordcomputer mittels motorischer Stellelemente ansteuerbar und einstellbar sind. Um in einfacher Weise eine Einstellung des Schleuderstreuers zu guten Materialverteilung unter Berücksichtigung von insbesondere der Hangneigung zu erreichen, ist vorgesehen, dass dem Schleuderstreuer Sensormittel zur Ermittlung der jeweils aktuellen Neigung des Schleuderstreuers zugeordnet sind, dass die Sensormittel Daten über die aktuelle Neigung des Schleuderstreuers an einen Bordcomputer übermitteln, und dass in der Speichereinrichtung des Bordcomputers ein Auswertungsprogramm hinterlegt ist, dass mittels des Auswerteprogrammes Korrekturwerte ermittelbar sind, dass aufgrund der ermittelten Korrekturwerte der Bordrechner die Stellelemente zur Einstellung der Mittel zur Einstellung des Aufgabenbereiches entsprechend ansteuerbar sind.

## Beschreibung

Die Erfindung betrifft einen Schleuderstreuer gemäß des Oberbegriffes des Patentanspruches 1.

Ein derartiger Schleuderstreuer ist beispielsweise durch die DE 10 2007 049 652 A1 bekannt. Für diesen Schleuderstreuer werden eine Vielzahl von Einstellmöglichkeiten vorgeschlagen, um trotz Umwelteinflüssen eine gute Verteilung des Düngers durch den Schleuderstreuer zu gewährleisten.

Durch die DE 196 26 348 A1 ist ein Schleuderstreuer bekannt geworden, wobei die durch eine Hangneigung hervorgerufenen negativen Einflüsse auf die Streugutverteilung dadurch ausgeschaltet werden sollen, dass zwischen dem Dosierorgan und der Schleuderscheibe aufrechte Leitelemente beabstandet zueinander unterhalb der Auslassöffnung angeordnet sind.

Zwischen der von der Auslassöffnung gebildeten Dosiervorrichtung und der Streuscheibe besteht ein räumlicher Abstand. Dieser Abstand ist die Fallhöhe für den dosierten Dünger. Diese Fallhöhe führt dazu, dass beim arbeiten in Hanglagen der Dünger in unterschiedlichen Bereichen auf die Streuscheibe auftrifft. Dadurch verändert sich die Querverteilung des Düngers, die Ackerfläche wird ungleichmäßig gedüngt, es ist somit mit Ertragseinbußen zu rechnen.

Der Erfindung liegt die Aufgabe zu Grunde, in einfacher Weise eine Einstellung des Schleuderstreuers zu guten Materialverteilung unter Berücksichtigung von insbesondere der Hangneigung zu erreichen.

Diese Aufgabe wird erfindungsgemäß dadurch gelöst, dass dem Schleuderstreuer Sensormittel zur Ermittlung der jeweils aktuellen Neigung des Schleuderstreuers zugeordnet sind, dass die Sensormittel Daten über die aktuelle Neigung des Schleuderstreuers an einen Bordcomputer übermitteln, und dass in der Speichereinrichtung des Bordcomputers ein Auswertungsprogramm hinterlegt ist, dass mittels des Auswerteprogrammes Korrekturwerte ermittelbar sind, dass aufgrund der ermittelten Korrekturwerte der Bordrechner die Stellelemente zur Einstellung der Mittel zur Einstellung des Aufgabenbereiches entsprechend ansteuerbar sind.

Infolge dieser Maßnahmen wird der durch die Hanglage aufgrund der Fallhöhe zwischen Dosierorgan und Streuscheibe der Änderung des an sich für verändernden Auftreffbereich des Düngers auf der Streuscheibe durch geeignete Maßnahmen entgegengewirkt, so dass auch bei Hangneigung durch die erfindungsgemäßen Maßnahmen eine gleichmäßige Düngerverteilung auf der zu bestreuenden Fläche erreicht wird.

Die Berechnung der Korrektur zur Aufgabe des Düngers auf der Streuscheibe aufgrund der Hangneigung des Streuers lässt sich dadurch erreichen, dass das hinterlegte Auswerteprogrammes Algorithmen, die einen funktionalen Zusammenhang zwischen der Neigung des Düngerstreuers und Änderung der Querverteilung darstellen, aufweist, dass aufgrund der ermittelten Änderung der Querverteilung die Korrekturwerte zur Ansteuerung der Stellelemente zur Einstellung des Aufgabenbereiches des Materiales auf den Schleuderscheiben ermittelbar ist.

Die durch die Hangneigung hervorgerufene erforderliche Änderung der Aufgabe des Düngers auf die Streuscheibe lässt sich dadurch in einfacher Weise erreichen, dass über den Bordrechner die Stellelemente zur Einstellung der Mittel zur Einstellung des Aufgabenbereiches des Materiales auf den Schleuderscheiben derart ansteuerbar sind, dass trotz wechselnder Handneigung die vorgegebene Querverteilungsqualität des Materiales bei der Verteilung des materiales einhaltbar ist.

Weitere Einzelheiten der Erfindung sind der folgenden Beschreibung zu entnehmen:

Zwischen der Dosiervorrichtung und den Streuscheiben besteht bei einem Schleuderstreuer, der beispielsweise als Zweischeibenstreuer ausgebildet ist, ein räumlicher Abstand. Dieser Abstand ist die Fallhöhe für den dosierten Dünger.

Derartige Zweischeibenstreuer weisen zur Aufnahme des auszubringenden Düngers einen Vorratsbehälter auf. Der Vorratsbehälter wird durch Dosiervorrichtungen, die in der Regel als durch in ihrer Öffnungsweite einstellbarer Auslassöffnung ausgebildet sind, nach unten abgeschlossen. Beabstandet zu den Auslauföffnungen sind jeweils motorisch rotierend angetriebene und mit Wurfschaufeln besetzte Streuscheiben angeordnet. Der von dem jeweiligen Dosierorgan auf die Streuscheiben auf einen vorbestimmten Auftreffbereich auf die Schleuderscheiben aufgegebene Dünger wird in Bereitverteilung auf der zu bestreuenden Oberfläche, wenn die Dosierorgane in bestimmter Weise zu den Streuscheiben in vorbestimmter Weise ausgerichtet sind, in gleichmäßiger Weise auf der zu bestreuenden Fläche verteilt.

Probleme gibt es jedoch beim Streuen am Hang. Die sich zwischen der Dosiervorrichtung und der Streuscheibe befindlichen Fallhöhe führt bei dem Ausbringen des Düngers in Hanglagen zu einem auftreffen des Düngers auf unterschiedlichen Bereichen der Streuscheiben. Dadurch verändert sich die Querverteilung des Düngers, die Ackerfläche wird ungleichmäßig gedüngt, es ist dann mit Ertragseinbußen zu rechnen.

Durch die in den Patentansprüchen sowie den eingangs beschriebenen Maßnahmen wird die Änderung der Querverteilung aufgrund der Hangneigung durch verschiedene Maßnahmen ausgeglichen.

Die Hangneigung des Streuers in und quer zur Fahrtrichtung wird mithilfe von Sensoren, die dem Streuer zugeordnet sind, ermittelt und an einen Bordrechner weitergeleitet. In dem Bordrechner werden die sich aufgrund der Hangneigung ergebenden Änderungen berechnet. Aus den errechneten Daten aufgrund eines in dem Speicher des Bordcomputer hinterlegten Auswertungsprogramms, welches auf hinterlegte Algorithmen zurückgreift, werden entsprechende entgegenwirkende Maßnahmen berechnet. Aufgrund dieser berechneten Maßnahmen werden die motorischen Stellvorrichtungen, die dem Streuer, beispielsweise der Dosiervorrichtung oder der Dosiervorrichtung nachgeschalteten Vorrichtung, zugeordnet sind, von dem Bordcomputer angesteuert und entsprechend eingestellt, damit auch am Hang eine gleichmäßige Verteilung des Düngers auf der zu bestreuenden Hangfläche gewährleistet ist.

In dem Bordcomputer sind in dessen Speicher Programme und/oder Algorithmen hinterlegt, die einen funktionalen Zusammenhang zwischen Neigung des Düngerstreuers und Änderung der Querverteilung darstellen.

Durch das in dem Bordcomputer hinterlegte Programm und/oder der hinterlegten Algorithmen werden alle Informationen, Hangneigung, Verlagerung des Düngers auf der jeweiligen Streuscheibe aufgrund der Hangneigung etc. verarbeitet, so dass mithilfe der von dem Bordcomputer angesteuerten Stellvorrichtung die Querverteilung so korrigiert wird, so dass sich wieder eine gleichmäßige Düngerverteilung ergibt.

## Patentansprüche

1. Schleuderstreuer mit einem Vorratsbehälter und zumindest einer unterhalb des Vorratsbehälters angeordneten Schleuderscheibe, der das sich im Vorratsbehälter befindliche Material über eine Dosiervorrichtung in einstellbarer Weise zuführbar ist, wobei die Zuführung des Materiales auf die jeweilige Schleuderscheibe mittels geeigneter Mittel zur Einstellung des Aufgabebereiches des Materials auf die jeweilige Schleuderscheibe einstellbar ist, wobei die Mittel von einem Bordcomputer mittels motorischer Stellelemente ansteuerbar und einstellbar sind, **dadurch gekennzeichnet, dass** dem Schleuderstreuer Sensormittel zur Ermittlung der jeweils aktuellen Neigung des Schleuderstreuers zugeordnet sind, dass die Sensormittel Daten über die aktuelle Neigung des Schleuderstreuers an einen Bordcomputer übermitteln, und dass in der Speichereinrichtung des Bordcomputers ein Auswertungsprogramm hinterlegt ist, dass mittels des Auswerteprogrammes Korrekturwerte ermittelbar sind, dass aufgrund der ermittelten Korrekturwerte der Bordrechner die Stellelemente zur Einstellung der Mittel zur Einstellung des Aufgabenbereiches entsprechend ansteuerbar sind.

2. Schleuderstreuer nach Anspruch 1, **dadurch gekennzeichnet, dass** das hinterlegte Auswerteprogrammes Algorithmen, die einen funktionalen Zusammenhang zwischen der Neigung des Düngerstreuers und Änderung der Querverteilung darstellen, aufweist, dass aufgrund der ermittelten Änderung der Querverteilung die Korrekturwerte zur Ansteuerung der Stellelemente zur Einstellung des Aufgabenbereiches des Materiales auf den Schleuderscheiben ermittelbar ist.

3. Schleuderstreuer nach zumindest einem der vorstehenden Ansprüche, **dadurch gekennzeichnet, dass** über den Bordrechner die Stellelemente zur Einstellung der Mittel zur Einstellung des Aufgabenbereiches des Materiales auf den Schleuderscheiben derart ansteuerbar sind, dass trotz wechselnder Handneigung die vorgegebene Querverteilungsqualität des Materiales bei der Verteilung des materiales einhaltbar ist.
